# EUROPEAN PATENT APPLICATION

(11) **EP 0 816 437 A2**
(43) Date of publication of application: **07.01.1998**
(21) Application number: 97304136.1
(22) Date of filing: 12.06.1997
(51) Int. Cl.: C08L 83/04

(54) **Curable organosiloxane compositions of extended shelf life and cured elastomers therefrom exhibiting extended mold life**

(30) Priority: 28.06.1996 US 673386; 01.07.1996 US 673908
(71) Applicant: DOW CORNING CORPORATION, Midland Michigan 48686-0994 (US)
(72) Inventor: Liles, Donald Taylor, Midland, Michigan 48640 (US); Norris, Ann Walstrom, Midland, Michigan 48642 (US); Donatelli, Joan Marie, Midland, Michigan 48642 (US); Kennan, Linda Denise, Midland, Michigan 48640 (US)
(74) Representative: Kyle, Diana

(57) **Abstract**

Curable organosiloxane compositions, comprising a silanol-containing polyorganosiloxane; an organosilicon compound containing at least three silicon-bonded hydrolyzable groups per molecule; a tin catalyst; and a polybutene fluid are claimed herein. They exhibit extended shelf life and yield, upon cure, an elastomer exhibiting extended mold life.

## Description

This invention relates to curable organosiloxane compositions and cured organosiloxane elastomers that exhibit extended mold lives.

The prior art describes organosiloxane compositions that cure to yield crosslinked elastomers and other useful products by the reaction of polyorganosiloxanes containing at least two silanol groups per molecule with organosilicon compounds containing at least three silicon-bonded alkoxy or other hydrolyzable groups per molecule as the crosslinker. This reaction is typically catalyzed by tin compounds or organotitanium compounds.

When the crosslinker is an alkoxysilane and the catalyst is a tin compound, the reactive ingredients of these compositions are typically packaged in two containers with the crosslinker and catalyst in one container and the silanol-containing polyorganosiloxane in a second container. The container with the crosslinker and the catalyst is typically referred to as the curing agent, while the container with the silanol-containing polyorganosiloxane is typically referred to as the base. The curing reaction occurs when the curing agent and base are mixed.

The 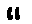 shelf life 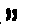 of the curing agent is defined as the time interval over which the curing agent is stored such that the physical properties of the resulting elastomer which result when curing agent and base are mixed, will not significantly differ from the physical properties of an elastomer that results when an aged curing agent is mixed with base. The 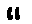 shelf life 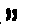 of the base is similarly defined. 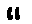 Mold life 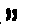 is defined as the number of parts that are cast by using molds for curing our claimed compositions.

French Patent Publications 2,398,891 and 2,40S,985 teach a composition containing a di(hydroxy)diorganopolysiloxane, a crosslinking agent, a mineral filler, a catalyst and an additive that reduces the gas-permeability of the composition. The additive contains 30 to 95% polybutylene and 5 to 70% solid products of lamellar structure. The solid products of lamellar structure therein can be eliminated if the number average molecular weight of the polybutylene is greater than 800.

European Patent Publication 0220809 provides a method for sealing a double glazed window using a flowable composition containing a hydroxyl-terminated polyorganosiloxane, an alkoxy-containing silicon compound, a catalyst and 5 to 65% by weight of a polybutylene. The number average molecular weight of the polybutylene, which is used to reduce the water vapor permeability of the composition, is not critical and varies from 300 to more than 100,000. When said composition is stored for an extended period of time, the polybutylene can be blended and stored with either the base or the curing agent.

British Patent 1,490,240 claims a composition comprising a silicone sealing composition and a polybutylene. Unlike our present invention, said patent requires the presence of moisture to cure.

Japanese Patent Publication (Kokai) 63-199277, discloses a sealant having a tacky surface and containing an organopolysiloxane, an inorganic filler and a polyisobutylene having a number average molecular weight between 4000 and 6000.

The present invention is based on our finding that adding a small amount of a polybutene extends the mold life of the elastomer that results when a tin-catalyzed organosiloxane composition is cured. This invention is also based on the discovery that adding a small amount of polybutene to the curing agent component of a two part tin-catalyzed curable organosiloxane composition surprisingly extends the shelf life of the curing agent.

This invention provides a curable organosiloxane composition comprising
A) a liquid curable polyorganosiloxane containing at least two silanol groups per molecule;
B) an organosilicon compound containing an average of at least three silicon-bonded hydrolyzable groups per molecule, wherein the concentration of the organosilicon compound is sufficient to cure the composition;
C) a tin-containing catalyst, wherein the concentration of tin-containing catalyst is sufficient to promote curing of the composition; and
D) a polybutene having a number average molecular weight below 600 and a viscosity number average at 38°C., of less than 100 mPa·s.

The polyorganosiloxane (Ingredient A) suitable for use in the present invention cures by the reaction of a silanol-containing polyorganosiloxane and an organosilicon compound containing an average of at least one alkoxy or other hydrolyzable groups. These curable polyorganosiloxanes contain an average of at least two silanol groups per molecule and exhibit a linear or branched structure. Preferred polyorganosiloxanes are liquids at 25°C.

The repeating units of ingredient A are represented by the formula R_{b}SiO_{(4-b)/2}, where R represents an unsubstituted or substituted monovalent hydrocarbon radical and b is 1 or 2. When b is 2, the hydrocarbon radicals of R are identical or different. This ingredient is a polymer that contains one, two or more different types of repeating units, or blends of two or more such polymers. In preferred embodiments, a predominate number of the repeating units in ingredient A are dimethylsiloxane units.

To achieve a useful level of tensile strength and other physical properties in a cured material, the number average molecular weight of ingredient A is from 800 to 100,000, more preferably from 20,000 to 65,000, and most preferably from 30,000 to 50,000. The viscosity of polyorganosiloxanes with number average molecular weights above about 100,000 are typically too viscous for convenient processing using conventional mixing equipment.

The crosslinker (Ingredient B) is typically organosilicon compounds containing an average of at least three silicon-bonded hydrolyzable groups per molecule. Preferred hydrolyzable groups are alkoxy groups and hydrogen atoms. More preferred hydrolyzable groups are alkoxy groups containing from 1 to 4 carbon atoms. Most preferred hydrolyzable groups are methoxy or ethoxy.

The crosslinker can be a silane, disiloxane or a polyorganosiloxane. Silanes are generally preferred, based on their cost and availability. Preferred silanes include methyltrimethoxysilane, phenyltrimethoxysilane, methyltriethoxysilane and alkyl orthosilicates, such as tetraethyl orthosilicate or condensation products of alkyl orthosilicates, which are typically referred to as alkyl polysilicates.

The concentration of crosslinker is that sufficient to convert the polyorganosiloxane of ingredient A to an elastomeric material exhibiting the desired physical properties. Typical compositions of the present invention contain from 0.5 to 6 weight percent of alkoxy, or other hydrolyzable group, based on the total weight of the curable composition. Ingredient B is normally present in an amount ranging from 0.8 to 6 weight percent; and in preferred embodiments, it is present from 1.2 to 4 weight percent, based on the total weight of ingredient A.

In addition to ingredients A and B, the composition of the present invention also includes a tin-containing catalyst (C) to promote the condensation reaction between the silanol-containing polyorganosiloxane (A) and the hydrolyzable group-containing crosslinker (B). Useful catalysts are divalent tin salts of carboxylic acids, such as stannous acetate or stannous octoate, and organotin compounds, such as dimethyltindineodecanoate, dibutyltin diacetate, dibutyltin dilaurate, dioctyltin diacetate and organofunctional stanoxanes. The carboxylic acid portion of these tin compounds contain from 1 to 20 carbon atoms.

Ingredient C is present in an amount ranging from 0.05 to 3 weight percent, based on the weight of ingredient A. In preferred embodiments, ingredient C is present from 0.06 to 1 weight percent on the same basis.

The polybutene (Ingredient D) of the present invention is a polymer or oligomer which has repeat units that are selected from the group consisting of the formulae: 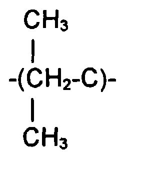 (i.e., isobutylene unit), 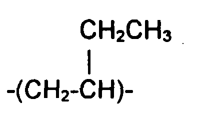 and 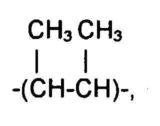 as well as rearranged products such as

-(CH₂CH₂CH₂CH₂)-

or

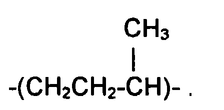

The repeat units of ingredient D may be identical or they comprise two or more of the above repeat units. The preferred ingredient D is an oligomer or polymer wherein a predominant proportion of the repeat units are isobutylene units. The viscosity at 38°C. of ingredient D is less than 100 mPa·s. In preferred embodiments, the viscosity of ingredient D is 25 to 75 mPa·s at 38°C; and in more preferred embodiments, the viscosity is 40 to 65 mPa·s at 38°C. In most preferred embodiments, the viscosity is 45 to 55 mPa·s at 38°C. The number average molecular weight of ingredient D is less than 600. In preferred embodiments, the molecular weight is less than 500; and in more preferred embodiments, the molecular weight is less than 400. When the viscosity of ingredient D is 100 mPa·s or greater at 38°C., or the number average molecular weight is 600 or greater, the release properties of the resulting elastomer when the composition is cured are poor.

Ingredient D is usually present in an amount ranging from 2 to 20 weight percent, based on the weight of ingredient A. In preferred embodiments, ingredient D is from 4 to 16 weight percent; or in most preferred embodiments, ingredient D is present from 8 to 12 weight percent based on the weight of ingredient A.

This invention also provides a curable organosiloxane composition comprising
(I) a base, comprising;
   A) a liquid curable polyorganosiloxane containing at least two silanol groups per molecule; and
(II) a curing agent, comprising;
   B) an organosilicon compound containing an average of at least three silicon-bonded hydrolyzable groups per molecule, wherein the concentration of the organosilicon compound is sufficient to cure the composition;
   C) a tin-containing catalyst, wherein the concentration of tin-containing catalyst is sufficient to promote curing of the composition; and
   D) a polybutene having a number average molecular weight below 600 and a viscosity at 38°C., of less than 100 mPa·s.

This invention also provides a method for extending the shelf life of two part tin catalyzed moisture curable organosiloxane compositions, comprising the steps of
(1) preparing a curing agent, comprising;
   B) an organosilicon compound containing an average of at least three silicon-bonded hydrolyzable groups per molecule, wherein the concentration of the organosilicon compound is sufficient to cure the composition;
   C) a tin-containing catalyst, wherein the concentration of tin-containing catalyst is sufficient to promote curing of the composition; and
   D) a polybutene having a number average molecular weight below 600 and a viscosity at 38°C., of less than 100 mPa·s;
(2) storing the curing agent for up to 18 months; and
(3) preparing a base comprising
   A) a liquid curable polyorganosiloxane containing at least two silanol groups per molecule.

In preferred embodiments of the present invention, the curing agent is stored for up to 12 months.

This invention also provides a method for extending the shelf life of two part tin catalyzed moisture curable organosiloxane compositions which further comprises the step of (4) mixing the base and curing agent and then allowing the composition to cure.

The present invention also provides a method for extending the mold life of an elastomer comprising the steps of
(1) preparing a composition, comprising
   A) a liquid curable polyorganosiloxane containing at least two silanol groups per molecule;
   B) an organosilicon compound containing an average of at least three silicon-bonded hydrolyzable groups per molecule, wherein the concentration of the organosilicon compound is sufficient to cure the composition;
   C) a tin-containing catalyst, wherein the concentration of tin-containing catalyst is sufficient to promote curing of the composition; and
   D) a polybutene having a number average molecular weight below 600 and a viscosity at 38°C. of less than 100 mPa·s; and
(2) curing the composition.

In addition to ingredients A, B, C and D, the compositions of this invention may also contain additional ingredients to modify the properties of the claimed curable compositions or the cured materials prepared from these compositions. The additional ingredients include liquid diluents; reinforcing fillers, such as finely divided silica of the fume or precipitated type; non-reinforcing fillers such as quartz and calcium carbonate; surfactants; stabilizers to inhibit degradation in the presence of heat and/or ultraviolet light; anti-oxidants; dyes; pigments; working time extenders and flame retardants. Non-reactive polyorganosiloxanes are a preferred class of diluents for use herein. The preferred non-reactive polyorgano-siloxane diluent is trimethylsiloxy-terminated dimethylsiloxane having a viscosity at 25°C. of 25 - 75 mPa·s.

In compositions and methods of the present invention, the base may also contain a small amount of water. Fillers and other optional ingredients can be packaged either with the base, with the curing agent or with both, so long as the fillers and other optional ingredients are substantially free of water.

The curable compositions of this invention are prepared by blending all of the ingredients together. Curing begins when ingredient A is mixed with Ingredient B in the presence of the tin-containing catalyst. Complete cure requires from several minutes to several hours, depending upon, among other things, the type and concentration of crosslinker and the type and concentration of catalyst.

In the alternative, the curable compositions of the present invention are prepared by preparing a base and a curing agent and by then mixing the base and curing agent. Curing begins when the base and curing agent are mixed. When the curable compositions of the present invention are prepared using a base and curing agent, the mix ratio can vary, depending upon the formulation of each part, from 1:1 to 40:1, parts base per part curing agent. Typical mix ratios are 1:1, 10:1 and 20:1.

The elastomers prepared using our claimed compositions are suitable for use in a variety of end use applications, including sealants, coating materials and as pottants or encapsulants for electrical or electronic devices. These compositions are particularly useful for preparing molds.

The following examples more fully describe curable compositions of the present invention. Unless otherwise indicated, all parts and percentages in the examples are by weight and all viscosities are the values measured at 25°C.

For each of Comparative Examples 1 - 4, and Examples 1 - 4, an elastomer was prepared by mixing 10 parts of the base with 1 part of the curing agent for each experiment. Then, an elastomer was prepared by mixing 10 parts of the base portion with 1 part of the curing agent portion and allowing the mixture to cure. The initial tensile strength, tear strength, durometer and elongation of the elastomers of Comparative Examples 1-4, and Examples 1-4, were next determined. The curing agents were then aged for 2 weeks at 70°C. and for each of Comparative Examples 1-4, and Examples 1-4, an elastomer was prepared by mixing 10 parts of the base with 1 part of the aged curing agent. These latter elastomers were allowed to cure and the two week tensile strength, tear strength, durometer and elongation were determined. The percent changes in elastomer properties after vulcanization with aged curing agents are reported in Table 1. Tensile strength and elongation were determined according to ASTM D 412 (Die C). Durometer was determined according to ASTM D 2240 (Shore A). Tear strength was determined according to ASTM D 624 (Tear Die B).

Experiments were conducted on elastomers prepared from the compositions of Comparative Examples 5 and 6, and Examples 5 and 6. For each experiment, an elastomer was prepared by mixing 10 parts of the base portion with 1 part of the curing agent portion. The base/curing agent mixture was deaired for 4 minutes under vacuum. A mold life testing device was prepared by pouring the base/curing agent mixture into a stainless steel moldmaster having a polyvinyl chloride (hereinafter 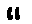 PVC") sleeve. The moldmaster was a cone shaped mold having straight sides and a slightly rounded bottom. The composition was allowed to cure for 16 hours at room temperature. The moldmaster was then removed and the composition was allowed to cure for an additional 8 hours at room temperature. A PVC bottom cap was then glued to the bottom of the device and a PVC top cap with a hole in the center was next glued to top of mold life testing device. A two part polyurethane composition, comprising a Part A and a Part B was prepared by mixing one part each of parts A and B. For Comparative Example 5, and Example 5, the polyurethane was Hei-Cast™ polyurethane resin. For Comparative Example 6, and Example 6, the polyurethane was resin Alumilite™ low viscosity super light liquid casting plastic. Both Hei-Cast™ polyurethane and Alumilite™ plastic are commercially available. The mixed resin was then poured into the mold life testing device. Using a tensile tester with a 454 kg. (1000 lb.) load cell, the kilograms (pounds) of force required to pull the cured polyurethane resin from the silicone elastomer in the mold life testing device was determined. The cured polyurethane resin that is pulled from the silicone elastomer is designated as a casting. The experiment was repeated, using the same cured silicone elastomer in the mold life testing device and a newly mixed and cured polyurethane resin, until the silicone mold failed. Silicone mold failure occurred when pieces of the silicone mold remained embedded in the polyurethane casting after the casting had been pulled from the silicone mold. The number of castings made before mold failure was determined and reported in Table II. To eliminate variability, the experiment was conducted using a robotic moldlife tester.

### Comparative Example 1

A base portion consisting of 100 parts of Silastic® 3481 base was prepared. A curing agent portion was prepared by mixing the following ingredients to homogeneity: 76 parts of a trimethylsiloxy-terminated dimethylsiloxane having a viscosity of 50 mPa·s at 25°C.; 20 parts of phenyltrimethoxysilane having a molecular weight of 186; and 4 parts of dibutyltin dilaurate. SILASTIC® is a registered trademark of Dow Corning Corporation of Midland, MI. Silastic® 3481 and 3483 Base are also manufactured by Dow Corning Corporation.

### Example 1

A base portion was prepared as in Comparative Example 1. A curing agent portion was also prepared as in Comparative Example 1, except that the trimethylsiloxy terminated dimethylsiloxane was replaced with a polybutene having a BROOKFIELD® viscosity of 25 mPa·s, measured at 38°C., according to ASTM D 4402 and a number average molecular weight of 370. BROOKFIELD® is a registered trademark of Brookfield Engineering Laboratories, Inc. of Stoughton, MA. An elastomer was prepared by mixing 10 parts of the base portion and 1 part of the curing agent portion.

### Comparative Example 2

A base portion was again prepared as in Comparative Example 1. A curing agent portion was also prepared by mixing the following ingredients to homogeneity: 71 parts of a trimethylsiloxy-terminated dimethylsiloxane having a viscosity of approximately 50 mPa·s; 25 parts of tetraethyl orthosilicate having a number average molecular weight of 208; and 4 parts of dibutyltin dilaurate. An elastomer was prepared by mixing 10 parts of this base and 1 part of this curing agent.

### Example 2

A base portion was prepared as in Comparative Example 1. A curing agent portion was prepared as in Comparative Example 2 except that the trimethylsiloxy terminated dimethylsiloxane was replaced with a polybutene having a BROOKFIELD® viscosity of 25 mPa·s at 38°C., according to ASTM D 4402 and a number average molecular weight of 370. An elastomer was prepared by mixing 10 parts of the base with the curing agent.

### Comparative Example 3

A base portion was prepared as in Comparative Example 1. A curing agent portion was prepared by mixing the following ingredients to homogeneity: 65 parts of a trimethylsiloxy-terminated dimethylsiloxane having a viscosity of approximately 50 mPa·s; 4 parts of dibutyltin dilaurate; and 32 parts of n-propyl orthosilicate having a number average molecular weight of 264. An elastomer was prepared by mixing 10 parts of said base and 1 part of said curing agent.

### Example 3

A base portion was prepared as in Comparative Example 1. A curing agent portion was prepared as in Comparative Example 3, except that the trimethylsiloxy-terminated dimethylsiloxane was replaced with a polybutene having a BROOKFIELD® viscosity of 25 mPa·s at 38°C., according to ASTM D 4402 and a number average molecular weight of 370. An elastomer was prepared by mixing 10 parts of the base with 1 part of the curing agent.

### Comparative Example 4

A base portion was prepared as in Comparative Example 1. A curing agent portion was prepared by mixing the following ingredients to homogeneity: 71 parts of a trimethylsiloxy-terminated dimethylsiloxane having a viscosity of approximately 50 mPa·s; 4 parts of dibutyltin dilaurate; and 25 parts of a mixture comprising 32.5% tetraethyl orthosilicate having a number average molecular weight of 208; 32.2% of ((OC₂H₅)₃Si)₂0 having a number average molecular weight of 342; 24.1% of (H₅C₂O)₃SiOSi((OC₂H₅)₂)OSi(OC₂H₅)₃ having a number average molecular weight of 476 and 11.2% of (C₂H₅O)₃Si((OSi(OC₂H₅))₂)Si(OC₂H₅)₃ having a number average molecular weight of 610. An elastomer was prepared by mixing 10 parts of this base and 1 part of the curing agent.

### Example 4

A base portion was prepared as in Comparative Example 1. A curing agent portion was prepared as in Comparative Example 4 except that the trimethylsiloxy terminated dimethylsiloxane was replaced with a polybutene having a BROOKFIELD® viscosity of 25 mPa·s at 38°C., according to ASTM D 4402 and a number average molecular weight of 370. An elastomer was prepared by mixing 10 parts of the base and 1 part of the curing agent.

### Comparative Example 5

A base portion was prepared as in Comparative Example 1. A curing agent portion was prepared by mixing the following ingredients to homogeneity: 56 parts of a trimethylsiloxy-terminated dimethylsiloxane having a viscosity of approximately 50 mPa·s; 40 parts of tetraethyl orthosilicate having a number average molecular weight of 208; and 4 parts of dibutyltin dilaurate.

### Example 5

A base portion was prepared as in Comparative Example 1. A curing agent portion was prepared as in Comparative Example 5 except that the trimethylsiloxy terminated dimethylsiloxane was replaced with a polybutene having a BROOKFIELD® viscosity of 25 mPa·s 38°C., according to ASTM D 4402 and a number average molecular weight of 370.

### Comparative Example 6

A base portion was prepared using 100 parts of Silastic® 3483 Base. A curing agent portion was prepared by mixing the following ingredients to homogeneity: 82.8 parts of a trimethylsiloxy-terminated dimethylsiloxane having a viscosity of approximately 50 mPa·s; 16 parts of phenyltrimethoxysilane having a number average molecular weight of 186; and 1.25 parts of dibutyltin dilaurate.

### Example 6

A base portion was prepared as in Comparative Example 6. A curing agent portion was prepared as in Comparative Example 6 except that the trimethylsiloxy terminated dimethylsiloxane was replaced with a polybutene having a BROOKFIELD® viscosity of 25 mPa·s at 38°C., according to ASTM D 4402 and a number average molecular weight of 370.

**TABLE I**

| | Comp. Example 1 | Example 1 | Comp. Example 2 | Example 2 | Comp. Example 3 | Example 3 | Comp. Example 4 | Example 4 |
|---|---|---|---|---|---|---|---|---|
| % Change in Tear Strength | -100% | -10% | -9% | 7% | 2% | 3% | -9% | 7% |
| % Change in Elongation | -100% | 48% | 75% | -17% | 32% | 12% | 47% | 38% |
| % Change in Tensile Strength | -45% | -17% | 1% | -10% | 1% | -0.5% | 31% | -2% |
| % Change in Durometer | -100% | -55% | -43% | 17% | -43% | 6% | -52% | -10% |

**TABLE II**

| | Comp. Example 5 | Example 5 | Comp. Example 6 | Example 6 |
|---|---|---|---|---|
| Initial kg Force to Demold | 5.9 | 7.3 | 7.7 | 6.8 |
| Final kg Force to Demold | 13.2 | 23.2 | 15.0 | 15.0 |
| Mold Life (Number of Castings) | 49 | 62 | 57 | 64 |

As indicated in Table I and as demonstrated by the change in physical properties of either freshly made or aged compositions containing polybutene, as compared to the physical properties obtained from similar compositions without polybutene, our claimed compositions containing polybutene surprisingly have longer shelf lives.

As demonstrated in Table II, elastomers prepared from compositions containing polybutene also have longer mold lives than elastomers prepared from similar compositions that do not contain polybutene.

## Claims

1. A curable organosiloxane composition comprising
(A) a liquid curable polyorganosiloxane containing at least two silanol groups per molecule;
(B) from 0.8 to 6 weight percent, based on the total weight of ingredient (A), of an organosilicon compound containing at least three silicon-bonded hydrolyzable groups per molecule, wherein component B is sufficient to cure the polyorganosiloxane;
(C) from 0.05 to 3 weight percent, based on the total weight of ingredient (A), of a tin compound sufficient to promote curing of the combination of component A and component B; and
(D) from 2 to 20 weight percent, based on the total weight of ingredient (A), of a polybutene having a number average molecular weight below 600 and a viscosity at 38°C. of less than 100 mPa·s.

2. A composition according to claim 1 further comprising water.

3. A composition according to claim 1 or 2, further comprising
(E) a trimethylsiloxy-terminated polyorganosiloxane, having a viscosity at 25°C. of 25 to 75 mPa·s.

4. A method of increasing the mold life of a silicone elastomer mold comprising
(I) preparing a curable organosiloxane composition according to any of claims 1 to 3, and
(II) allowing the composition to cure to form a silicone elastomer mold.

5. A method of increasing the shelf life of a two part curable organosiloxane composition comprising a base portion and a curing agent portion, said method comprising the steps of
(I) preparing a base portion comprising
(A) a liquid curable polyorganosiloxane containing at least two silanol groups per molecule; and
(II) preparing a curing agent portion comprising
(B) an organosilicon compound containing at least three silicon-bonded hydrolyzable groups per molecule, wherein the concentration of component B is from 0.8 to 6 wt%, based on the total weight of ingredient (A);
(C) a tin compound to promote curing of the combination of component A and component B at a concentration of from 0.05 to 3 weight percent; based on the total weight of ingredient (A); and
(D) a polybutene having a number average molecular weight below 600 and a viscosity at 38°C. of less than 100 mPa·s at a concentration of from 2 - 20 weight percent; based on the total weight of ingredient (A); and
(III) admixing parts (I) and (II).

6. A method of increasing the shelf life of a two part curable organosiloxane composition comprising a base portion and a curing agent portion, said method comprising the steps of
(I) preparing a base portion comprising
(A) a liquid curable polyorganosiloxane containing at least two silanol groups per molecule; and
(D) a polybutene having a number average molecular weight below 600 and a viscosity at 38°C. of less than 100 mPa·s at a concentration of from 2 to 20 weight percent, based on the total weight of ingredient (A); and
(II) a curing agent portion comprising
(B) an organosilicon compound containing at least three silicon-bonded hydrolyzable groups per molecule, wherein the concentration of component B is from 0.8 to 6 weight percent, based on the total weight of ingredient (A); and
(C) a tin compound to promote curing of the combination of component A and component B at a concentration of from 0.05 to 3 weight percent; and
(III) admixing parts (I) and (II).
